# EUROPÄISCHE PATENTANMELDUNG

(11) **EP 4 371 458 A1**
(43) Veröffentlichungstag der Anmeldung: **22.05.2024**
(21) Anmeldenummer: 23205239.9
(22) Anmeldetag: 23.10.2023
(51) Int. Cl.: A47L 9/14, B01D 39/18, B01D 39/08

(54) **FILTERBEUTEL FÜR EINEN STAUBSAUGER**

(30) Priorität: 18.11.2022 DE 102022130547
(71) Anmelder: Wolf PVG GmbH & Co. KG, 32602 Vlotho-Exter (DE)
(72) Erfinder: CZADO, Wolfgang, 32457 Porta Westfalica (DE)
(74) Vertreter: Dantz, Jan Henning

(57) **Zusammenfassung**

Ein Filterbeutel für einen Staubsauger weist eine Wandung auf, die einen Innenraum umschließt und eine Einlassöffnung aufweist, wobei die Wandung mindestens eine Lage aus mindestens einem luftdurchlässigen Material umfasst. Erfindungsgemäß ist das mindestens eine luftdurchlässige Material Fasern umfasst, die aus mindestens einem nachwachsenden Rohstoff gewonnen sind, dadurch kann die Ökobilanz bei der Herstellung des Filterbeutels verbessert werden.

## Beschreibung

Die vorliegende Erfindung betrifft einen Filterbeutel für einen Staubsauger, der eine Wandung aufweist, die einen Innenraum umschließt, und der eine Einlassöffnung aufweist. Die Wandung umfasst mindestens eine Lage aus mindestens einem luftdurchlässigen Material. Die vorliegende Erfindung betrifft außerdem ein Filterbeutel für einen Staubsauger, der eine Wandung aufweist, die einen Innenraum umschließt, wobei die Wandung mindestens eine Lage mindestens eines luftdurchlässigen Materials umfasst, und wobei der Filterbeutel eine Einlassöffnung aufweist, an der eine Halteplatte angeordnet ist.

### Stand der Technik

Es gibt Filterbeutel für Staubsauger, die aus luftdurchlässigem Material bestehen, sodass der Staub in einem Innenraum des Staubsaugerbeutels gehalten werden kann, während der Luftstrom des Staubsaugers die Beutelwand passieren kann. Filterbeutelbeutel gemäß dem Stand der Technik umfassen häufig Zellstofffasern, beziehungsweise Vliesstoff, der Zellstoff- oder Kunststofffasern umfasst, wobei die Zellstofffasern meistens aus Holz, beziehungsweise aus gefällten Bäumen, und die Kunststofffasern meistens aus Erdöl gewonnen werden. Dies ist beispielsweise in der DE 100 51 186 A1 der Fall.

Bei Staubsaugerbeuteln gemäß dem Stand der der Technik besteht der Nachteil, dass der Zellstoff häufig eine geringe Aufnahmefähigkeit von Feuchtigkeit aufweist. Bei Fasern aus Zellstoff ist auch der Flächenverbrauch und ein verhältnismäßig langsames Nachwachsen von Holz nachteilig für die Herstellung der Filterbeutel. Im Falle der Verwendung von Kunststofffasern werden diese häufig durch umweltschädliche Verfahren gewonnen. Außerdem führt die Verwendung von Erdöl zu erhöhter Rohstoffknappheit.

Es ist daher Aufgabe der vorliegenden Erfindung einen Filterbeutel für einen Staubsauger anzugeben, der eine verbesserte Aufnahmefähigkeit von Feuchtigkeit aufweist, der eine verbesserte Ökobilanz besitzt und der zu verringerten allergischen Reaktionen führt.

Diese Aufgabe wird mit einem Filterbeutel mit den Merkmalen des Anspruchs 1 gelöst.

Erfindungsgemäß umfasst der Filterbeutel für einen Staubsauger eine Wandung, die einen Innenraum umschließt, und eine Einlassöffnung, wobei die Wandung aus mindestens einer Lage aus mindestens einem luftdurchlässigen Material ausgebildet ist. Das mindestens eine luftdurchlässige Material umfasst Fasern, die aus mindestens einem nachwachsenden Rohstoff gewonnen sind. Hierdurch kann die Menge an Kohlenstoffdioxid, die während der Herstellung des Filterbeutels freigesetzt wird, und die Materialknappheit des mindestens einen luftdurchlässigen Materials reduziert werden.

Vorzugsweise kann das mindestens eine luftdurchlässige Material mindestens eine Lage eines Vliesstoffs und/oder eines Faservlieses umfassen, wobei die mindestens eine Lage die Fasern, die aus dem nachwachsenden Rohstoff gewonnen sind, umfassen kann. Der Vliesstoff und/oder das Faservlies kann trockengelegt sein und bildet bevorzugt eine Kapazitätslage der Wandung aus. Dies kann beispielsweise in einem Airlaidverfahren erfolgen.

Vorzugsweise umfasst das mindestens eine luftdurchlässige Material zu mindestens 50 % (Gew.-%) und bevorzugt zu mindestens 75 % (Gew.-%) und noch bevorzugter zu mindestens 85 % (Gew.-%) den mindestens einen nachwachsenden Rohstoff, der aber auch 100 % (Gew.-%) des mindestens einen luftdurchlässigen Materials ausbilden kann. Das mindestens eine luftdurchlässige Material kann ansonsten, also bis zu 50 % (Gew.-%) und vorzugsweise bis zu 25 % (Gew.-%) und noch bevorzugter zu weniger als 15 % (Gew.-%), Kunststofffasern, die aus einem nicht nachwachsenden Rohstoff gewonnen sein können, und/oder das mindestens eine Bindemittel aufweisen, wobei die Kunststoffasern auch Bindefasern sein können, die beispielsweise chemisch oder thermisch aktiviert sein können. Die Bindefasern können Schmelzfasern und/oder Bikomponentenfasern sein, die mindestens einen Kunststoff umfassen, der bei einer niedrigeren Temperatur als die anderen in dem mindestens einen luftdurchlässigen Material enthaltenen Fasern oder als ein Kern der Bikomponentenfasern aufschmilzt. Das mindestens eine Bindemittel kann ein Klebstoff sein, der beispielsweise silikonbasiert sein kann. Die angegebenen Prozentsätze beziehen sich auf die Gewichtsteile oder die Faserzahl, wobei 100 % jeweils das Gesamtgewicht, beziehungsweise die Gesamtfaserzahl der betreffenden Lage des mindestens einen luftdurchlässigen Materials ist.

In einer Ausführungsform der vorliegenden Erfindung umfasst der mindestens eine nachwachsende Rohstoff Bestandteile mindestens einer nachwachsenden Pflanze. Die mindestens eine nachwachsende Pflanze kann vorzugsweise mit einer Geschwindigkeit von bis zu 0,01 m bis 0,75 m pro 24 Stunden und bevorzugt von bis zu 0,05 m bis 0,3 m pro 24 Stunden wachsen. Durch eine solche Wachstumsgeschwindigkeit kann die Rohstoffknappheit des mindestens einen nachwachsenden Rohstoffes reduziert werden, was beispielsweise die Kosten und/oder den Verbrauch von Agrarflächen für die Herstellung des Filterbeutels reduzieren kann. Außerdem kann das mindestens eine luftdurchlässige Material so zumindest teilweise biologisch abbaubar sein. Die mindestens eine nachwachsende Pflanze kann insbesondere ein Gras sein, was eine Ernte oder ein Schneiden des nachwachsenden Rohstoffs vereinfacht. Für den vorliegenden Anwendungsfall besitzen Gräser eine besser Ökobilanz als Bäume wegen des geringen Platz- und Wasserbedarfes.

Ein Spinn- oder ein Meltblownvliesstoff bilden bevorzugt jeweils mindestens eine weitere Lage aus, beispielsweise eine Stützlage und/oder eine Feinfilterlage, die das mindestens eine luftdurchlässige Material umfassen kann. Dies kann die Filter- und Staubspeicherleistung des Filterbeutels verbessern. Das luftdurchlässige Material kann beispielsweise folgenden Lagenaufbau von der Außenseite zur Innenseite/zum Innenraum der Wandung des Staubsaugerbeutels aufweisen: einen Spinnvliesstoff, einen Meltblownvliesstoff, einen Spinnvliesstoff, die Kapazitätslage und eine weitere Lage aus einem Spinnvliesstoff.

Vorzugsweise umfasst eine gemäß der Norm DIN EN ISO 9073-2:1996 gemessene Dicke des luftdurchlässigen Materials und/oder der Kapazitätslage von 0,5 mm bis 10 mm, bevorzugt von 1 mm bis 6 mm und noch bevorzugter von 2 mm bis 4,8 mm. Insbesondere beträgt eine Dichte oder ein spezifisches Volumen des luftdurchlässigen Materials 0,01 g/cm³ bis 1 g/cm³ oder 8 cm³/g bis 100 cm³/g.

Vornehmlich beträgt ein Flächengewicht des luftdurchlässigen Materials 10 g/m² bis 300 g/m², bevorzugt 20 g/m² bis 100 g/m² und noch bevorzugter 30 g/m² bis 70 g/m².

Bevorzugt beträgt ein gemäß DIN EN 60312-1:2017 oder DIN EN 60312-1:2014 oder IEC 62885-2:2021 gemessener Volumenstrom durch das luftdurchlässige Material ohne aufgenommenen Staub, also mit leerem Filterbeutel und/oder Innenraum, vorzugsweise 20 l/s bis 40 l/s, bevorzugt von 25 bis 35 l/s und noch bevorzugter von 26 bis 33 l/s und/oder ein gemäß DIN EN 60312-1:2017 oder DIN EN 60312-1:2014oder IEC 62885-2:2021 gemessener Volumenstrom durch das luftdurchlässige Material beträgt mit 300 g gemäß IEC 62885-2 aufgenommenem Staub, beispielsweise mit Prüfstaub Typ 8 von DMT in dem Filterbeutel und/oder dem Innenraum, beträgt vorzugsweise 20 l/s bis 40 l/s, bevorzugt von 25 bis 35 l/s und noch bevorzugter von 25 bis 30 l/s. Dies führt zu einer verbesserten Lebensdauer/Standzeit des Filterbeutels.

Die mindestens eine Lage des mindestens einen luftdurchlässigen Materials, also beispielsweise die mindestens eine Lage eines Vliesstoffs und/oder eines Faservlieses, kann durch zumindest teilweise geschmolzene Bindefasern und/oder ein Bindemittel gebunden sein, die in dem mindestens einen luftdurchlässigen Material enthalten sein können, was für die Widerstandsfähigkeit und der Langlebigkeit des Filterbeutels von Vorteil ist. Des Weiteren kann das mindestens eine luftdurchlässige Material auch aus den Fasern gewebt sein.

Die aus dem mindestens einen nachwachsenden Rohstoff gewonnenen Fasern umfassen insbesondere Zellulosefasern, die dem Staubfilterbeutel ein erhöhtes Staubspeichervolumen ermöglichen können.

Das mindestens eine luftdurchlässige Material und/oder die Fasern und/oder der mindestens eine nachwachsende Rohstoff ist vorzugsweise durch ein Dampfdruckaufschlussverfahren und/oder ein Ultraschallverfahren gewonnen. Hierdurch kann der Filterbeutel mit reduziertem Chemieabfall besonders umweltfreundlich hergestellt sein. Das Dampfdruckaufschlussverfahren kann beispielsweise alkalisiertes Wasser umfassen und/oder bei über 100 °C erfolgen. Das Herstellungsverfahren des Filterbeutels außerdem ein Raufen, Rösten, Brechen, Schwingen, Hecheln, Mahlen, Schreddern, Schleifen, Sulfat-, Soda- oder Sulfitverfahren und/oder Kardieren und/oder ein Verfahren mit Essigsäure, das beispielsweise dem Faseraufschluss dient, umfassen.

Vorzugsweise weisen die Fasern des mindestens einen luftdurchlässigen Materials eine Faserlänge von 0,5 mm bis 1500 mm, bevorzugt von 0,75 mm bis 150 mm und noch bevorzugter von 1 mm bis 50 mm auf. Die Fasern können auch Werg oder Superkurzfasern sein, die häufig während des Faseraufschlusses anfallen und die so verwertet anstatt entsorgt werden können. Die Dicke der Fasern ist vorzugsweise 0,11 µm bis 100 µm, bevorzugt 1 µm bis 75 µm und besonders bevorzugt 1 µm bis 10 µm.

Die Fasern können insbesondere eine Feinheit und/oder eine Faserdicke und/oder eine lineare Dichte von 0,5 dtex bis 10 dtex und bevorzugt von 1 dtex bis 5 dtex, insbesondere 1,2 dtex bis 2,2 dtex aufweisen, die nach den Normen ISO 1144:2016-09 und/oder DIN 60905-1:1985-12 ermittelbar ist.

Bevorzugt umfasst der mindestens eine nachwachsende Rohstoff und/oder die Fasern aus dem mindestens einen nachwachsenden Rohstoff mindestens einen aus der Gruppe von: Bambus, Zuckerrohr, Hanf, Kenaf, Jute, Miscanthus, Elefantengras, Schilf, Chinaschilf, Riesen-Chinaschilf, Ramie, Getreide, Brennnessel, Hopfen, Süßgras, Roggen, Weizen, Buchweizen, Gerste, Hafer, Hirse, Reis, Mais, Raps, Luzerne, Lupine, Banane, Ananas, Seegras, Algen, Seetang und/oder Braunalgen. Hierdurch wird der Wasserverbrauch und/oder den Nährstoffbedarf, der für die Gewinnung der Fasern ab Einsaat des nachwachsenden Rohstoffs anfällt reduziert. Der mindestens eine nachwachsende Rohstoff kann aber auch Malz, eine Bagasse, einen Treber, ein Stroh, ein Heu und/oder einen Grünschnitt eines dieser Rohstoffe umfassen, was insbesondere für Ausführungsformen aus Getreide oder Zuckerrohr, oder aus Treber oder Bagasse, vorteilhaft sein kann, da beispielsweise das Stroh keine signifikante Menge an Korn umfasst, dass anderweitig genutzt werden kann, sodass auf diese Art ein Abfall- oder ein Nebenprodukt wieder- und/oder weiterverwertet werden kann. Die Verwendung natürlicher Materialien ermöglicht außerdem eine hypoallergene Ausbildung des Filterbeutels.

Die Fasern können nach der Ernte, beispielsweise durch Schneiden, getrocknet werden. Eine Trocknung der Fasern kann eine Lufttrocknung in einem Ofen und/oder eine Bandtrocknung und/oder eine andere Trocknung in einem erwärmten Luftstrom umfassen. Der mindestens eine nachwachsende Rohstoff weist vorzugsweise eine Restfeuchte von weniger als 25 Gew.-%, bevorzugt weniger als 15 Gew.-% und noch bevorzugter weniger als 6 Gew.-%. Hierdurch kann beispielsweise die Haltbarkeit des Staubsaugerbeutels verlängert und/oder seine Widerstandsfähigkeit erhöht sein.

Gemäß den bevorzugten Ausführungsformen der vorliegenden Erfindung kann der mindestens eine nachwachsende Rohstoff ein recycliertes Material umfassen. Es können beispielsweise Lebensmittelreste/-abfälle oder verdorrte und/oder abgestorbene Pflanzen verwertet werden. Außerdem kann das Material durch einen erneuten Faseraufschluss eines aus den erwähnten Fasern hergestellten Produktes, beispielsweise eines Textilmaterials, hergestellt sein.

Ein Schneiden der genannten Pflanzen kann außerdem über deren Wachstumspunkt erfolgt sein, sodass der Rohstoff ohne Neuaussaat nachwachsen kann.

Auch andernfalls kann der nachwachsende Rohstoff bis zu mehrere Male pro Jahr geerntet werden, was die Materialknappheit zusätzlich verringert.

Wenn die Wandung des Filterbeutels mehr als eine Lage aus mindestens einem luftdurchlässigen Material aufweist, wobei mindestens eine Lage des mindestens einen luftdurchlässigen Materials den mindestens einen nachwachsenden Rohstoff aufweist, kann die Wandung des Filterbeutels außerdem auch Lagen aufweisen, die mindestens ein luftdurchlässiges Material umfassen, dass keinen Anteil eines nachwachsenden Rohstoffes aufweisen. Dieses Material kann beispielsweise ein Kunststoff sein oder dieses Material kann beispielsweise Kunststofffasern umfassen.

Vorzugsweise umfasst der Begriff Kunststoff mindestens ein Phenoplast, Polyester, Polyolefin, Polyamid, Biopolymer, Galalith und/oder ein Polyacrylat oder eine Mischung daraus. Der Kunststoff kann zudem zumindest Bestandteile von Lipid, Milch, Essig, Fett und/oder Öl aufweisen. Darüber hinaus kann der Kunststoff recycliert sein, was beispielsweise durch Schreddern und/oder Aufschmelzen von gebrauchten und/oder entsorgten Kunststoffprodukten, vorzugsweise von mindestens teilweise synthetischen Textilien und/oder Kunststoffflaschen und/oder Kunststoffverpackungen und/oder Verschnittelementen aus der Produktion und/oder gebrauchten Kunststoffgegenständen erfolgen kann. Durch anschließendes Vergießen und Erkalten, beziehungsweise durch ein Verspinnen des Kunststoffes können so wieder Kunststofffasern gewonnen werden.

Die vorliegende Erfindung umfasst außerdem einen Filterbeutel für einen Staubsauger, der eine Wandung aufweist, die einen Innenraum umschließt, wobei die Wandung mindestens eine Lage mindestens eines luftdurchlässigen Materials umfasst, und wobei der Filterbeutel eine Einlassöffnung aufweist, wobei an der Einlassöffnung eine Halteplatte angeordnet ist. Die Halteplatte und/oder das mindestens eine luftdurchlässige Material umfasst mindestens einen recyclierten und/oder biobasierten Kunststoff oder ist daraus hergestellt. Dies kann die Rohstoffknappheit für die Kunststoffherstellung und die Kohlenstoffdioxidmenge, die während der Herstellung des Filterbeutels freigesetzt wird, sowie die Herstellungskosten des Beutels, reduzieren.

Vorzugsweise umfasst das mindestens eine luftdurchlässige Material und/oder die Halteplatte zu mindestens 50 % (Gew.-%) und bevorzugt zu mindestens 75 % (Gew.-%) und noch bevorzugter zu mindestens 85 % (Gew.-%) den mindestens einen recyclierten und/oder biobasiertem Kunststoff oder ist daraus hergestellt. Ein Beimischen herkömmlicher Kunststoffe kann zur Optimierung der Härte und/oder Langlebigkeit der Halteplatte und/oder des textilen Materials, bei gleichzeitiger Reduzierung der Abhängigkeit des Herstellungsverfahrens von fossilen Rohstoffen erfolgen. Außerdem kann das mindestens eine luftdurchlässige Material und/oder die Halteplatte so zumindest teilweise biologisch abbaubar sein.

In einer Ausführungsform der vorliegenden Erfindung umfasst das mindestens eine luftdurchlässige Material einen gewebten Textilstoff oder eine Lochfolie, wodurch eine Wandung des Filterbeutels eine erhöhte Reißbeständigkeit aufweisen kann.

Die Halteplatte kann einen Verschlussdeckel aufweisen, der aus demselben Kunststoff hergestellt sein kann und/oder der einteilig mit der Halteplatte in einem Gießverfahren hergestellt ist, sodass kein Schmutz aus dem Filterbeutel entweichen kann, wenn sich der Beutel im verschlossenen Zustand befindet.

Vorzugsweise umfasst der mindestens eine Kunststoff ein Phenoplast, Polyester, Polyolefin, Polyamid, Biopolymer, Galalith und/oder ein Polyacrylat, er kann aber auch mindestens ein Lipid, Milch, Essig, Fett und/oder Öl umfassen. Der Kunststoff kann auch recycliert sein, er kann beispielsweise ausgehärtetes, gebrauchtes Brat- und/oder Frittierfett aufweisen, was für die Vermeidung von Anfall vorteilhaft ist. Ansonsten kann ein Rezyklieren des Kunststoffes ein Schreddern und/oder Aufschmelzen von gebrauchten und/oder entsorgten Kunststoffprodukten, vorzugsweise von mindestens teilweise synthetischen Textilien und/oder Kunststoffflaschen und/oder Kunststoffverpackungen und/oder Verschnittelementen aus der Produktion umfassen. Durch anschließendes Vergießen und Erkalten, oder durch ein Verspinnen des Kunststoffes können auf diese Weise das mindestens eine luftdurchlässige Material und/oder die Halteplatte hergestellt werden.

## Patentansprüche

1. Filterbeutel für einen Staubsauger, der eine Wandung aufweist, die einen Innenraum umschließt, und der eine Einlassöffnung aufweist, wobei die Wandung mindestens eine Lage aus mindestens einem luftdurchlässigen Material umfasst, **dadurch gekennzeichnet, dass** das mindestens eine luftdurchlässige Material Fasern umfasst, die aus mindestens einem nachwachsenden Rohstoff gewonnen sind.

2. Filterbeutel nach Anspruch 1, **dadurch gekennzeichnet, dass** mindestens eine Lage des mindestens einen luftdurchlässigen Materials zu mindestens 50 Gew.-% und bevorzugt zu mindestens 75 Gew.-% und noch bevorzugter zu mindestens 85 Gew.-% den mindestens einen nachwachsenden Rohstoff umfasst.

3. Filterbeutel nach einem der vorgehenden Ansprüche, **dadurch gekennzeichnet, dass** der mindestens eine nachwachsende Rohstoff Bestandteile mindestens einer nachwachsenden Pflanze umfasst, die mit einer Geschwindigkeit von bis zu 0,01 m bis 0,75 m pro 24 Stunden und bevorzugt von bis zu 0,05 m bis 0,3 m pro 24 Stunden wächst.

4. Filterbeutel nach einem der vorgehenden Ansprüche, **dadurch gekennzeichnet, dass** die Fasern Zellulosefasern umfassen.

5. Filterbeutel nach einem der vorgehenden Ansprüche, **dadurch gekennzeichnet, dass** das mindestens eine luftdurchlässige Material und/oder die Fasern und/oder der mindestens eine nachwachsende Rohstoff in einem Dampfdruckaufschlussverfahren gewonnen ist.

6. Filterbeutel nach einem der vorgehenden Ansprüche, **dadurch gekennzeichnet, dass** der mindestens eine nachwachsende Rohstoff mindestens einer aus der Gruppe von: Bambus, Hanf, Kenaf, Bagasse, Jute, Miscanthus, Elefantengras, Schilf, Chinaschilf, Riesen-Chinaschilf, Ramie, Getreide, Brennnessel, Hopfen, Süßgras, Roggen, Weizen, Gerste, Hafer, Hirse, Reis, Mais, Raps, Luzerne, Lupine, Banane, Ananas, Seegras, Algen, Seetang und/oder Braunalgen ist.

7. Filterbeutel nach einem der vorgehenden Ansprüche, **dadurch gekennzeichnet, dass** der mindestens eine nachwachsende Rohstoff ein Stroh, Heu oder Grünschnitt von mindestens einem Rohstoff aus der Gruppe von: Bambus, Hanf, Kenaf, Bagasse, Jute, Miscanthus, Elefantengras, Schilf, Chinaschilf, Riesen-Chinaschilf, Ramie, Getreide, Brennnessel, Hopfen, Süßgras, Roggen, Weizen, Gerste, Hafer, Hirse, Reis, Mais, Raps, Luzerne, Lupine, Banane, Ananas, Seegras, Algen, Seetang und/oder Braunalgen ist.

8. Filterbeutel nach einem der vorgehenden Ansprüche, **dadurch gekennzeichnet, dass** der mindestens eine nachwachsende Rohstoff durch Schneiden einer Pflanze über ihrem Wachstumspunkt gewonnen wird, sodass der Rohstoff ohne Neuaussaat nachwachsen kann.

9. Filterbeutel nach einem der vorgehenden Ansprüche, **dadurch gekennzeichnet, dass** der mindestens eine nachwachsende Rohstoff ein recycliertes Material ist.

10. Filterbeutel für einen Staubsauger, der eine Wandung aufweist, die einen Innenraum umschließt, wobei die Wandung mindestens eine Lage mindestens eines luftdurchlässigen Materials umfasst, und wobei der Filterbeutel eine Einlassöffnung aufweist, wobei an der Einlassöffnung eine Halteplatte angeordnet ist, **dadurch gekennzeichnet, dass** die Halteplatte und/oder das mindestens eine luftdurchlässige Material mindestens einen recyclierten und/oder biobasierten Kunststoff umfasst oder daraus hergestellt ist.

11. Filterbeutel nach Anspruch 10, **dadurch gekennzeichnet, dass** das mindestens eine luftdurchlässige Material und/oder die Halteplatte zu mindestens 50 % und bevorzugt zu mindestens 75 % und noch bevorzugter zu mindestens 85 % den mindestens einen recyclierten und/oder biobasiertem Kunststoff umfasst oder daraus hergestellt ist.

12. Filterbeutel nach einem der vorgehenden Ansprüche, **dadurch gekennzeichnet, dass** das mindestens eine luftdurchlässige Material einen gewebten Textilstoff umfasst.

13. Filterbeutel nach einem der vorgehenden Ansprüche, **dadurch gekennzeichnet, dass** das mindestens eine luftdurchlässige Material eine Lochfolie umfasst.

14. Filterbeutel nach einem der vorgehenden Ansprüche 10 bis 13, **dadurch gekennzeichnet, dass** der mindestens eine Kunststoff ein Phenoplast, Polyester, Polyolefin, Polyamid, Biopolymer, Galalith und/oder ein Polyacrylat umfasst.

15. Filterbeutel nach einem der vorgehenden Ansprüche 10 bis 14, **dadurch gekennzeichnet, dass** der mindestens eine Kunststoff mindestens ein Lipid, Milch, Essig, Fett und/oder Öl umfasst.
